# EUROPÄISCHE PATENTSCHRIFT

(11) **EP 3 311 550 B1**
(45) Veröffentlichungstag und Bekanntmachung des Hinweises auf die Patenterteilung: **10.07.2019**
(21) Anmeldenummer: 16726845.7
(22) Anmeldetag: 27.05.2016
(51) Int. Cl.: H04L 29/06, B60R 16/023, G06F 9/54, B60W 30/00

(54) **VERFAHREN ZUR KOMMUNIKATION ZWISCHEN SOFTWAREKOMPONENTEN IN EINEM KRAFTFAHRZEUG**
METHOD FOR COMMUNICATION BETWEEN SOFTWARE COMPONENTS IN A VEHICLE
METHODE POUR LA COMMUNICATION ENTRE COMPOSANTS LOGICIEL DANS UN VEHICLE

(30) Priorität: 19.06.2015 DE 102015211316
(43) Veröffentlichungstag der Anmeldung: 25.04.2018
(73) Patentinhaber: Robert Bosch GmbH, 70442 Stuttgart (DE)
(72) Erfinder: KRAMER, Simon, 71229 Leonberg (DE); SABALLUS, Bjoern, 70193 Stuttgart (DE)
(86) Internationale Anmeldenummer: PCT/EP2016/061973
(87) Internationale Veröffentlichungsnummer: WO 2016/202553

(56) Entgegenhaltungen:
- US-A1- 2012 227 091

## Beschreibung

Die vorliegende Erfindung betrifft ein Verfahren zur Kommunikation zwischen Softwarekomponenten in einem Kraftfahrzeug sowie eine Recheneinheit und ein Computerprogramm zu dessen Durchführung.

### Stand der Technik

Softwarekomponenten in einem Kraftfahrzeug, die beispielsweise auf ein und derselben Recheneinheit oder auf unterschiedlichen Recheneinheiten ausgeführt werden, können in unterschiedlichen Betriebsmodi betrieben werden. Die Softwarekomponenten kommunizieren in diesen unterschiedlichen Betriebsmodi miteinander und tauschen Daten aus.

Die DE 10 2007 051 912 beschreibt ein Verfahren und eine Vorrichtung zur Konfiguration eines Fahrzeugnetzwerkes, wobei das Fahrzeugnetzwerk eine Vielzahl von Steuergeräten umfasst, die über mindestens ein Bussystem miteinander Botschaften austauschen, wobei die Anzahl der Steuergeräte und/oder die benötigten Botschaften von der Konfiguration des Kraftfahrzeuges abhängig ist, wobei mindestens einzelne Steuergeräte derart ausgebildet sind, dass deren Kommunikationsverhalten veränderbar ist, wobei jeder Botschaft unabhängig von der Konfiguration eine eindeutige ID zugeordnet ist, wobei in Abhängigkeit der Konfiguration eine Kommunikationsmatrix erstellt wird, die mindestens die IDs der Botschaften enthält, die für die Konfiguration notwendig sind, wobei die Kommunikationsmatrix weiter beinhaltet, welches Steuergerät welche Botschaft sendet und welches Steuergerät welche Botschaft empfängt, wobei in einer Initialisierungsphase die einzelnen Steuergeräte ihr Kommunikationsverhalten entsprechend dem Sende- und Empfangsbedarf der Kommunikationsmatrix anpassen.

Dokument US-2012227091 stellt den nächsten Stand der Technik dar und offenbart ein ein konfigurierbares Netzwerk.

### Offenbarung der Erfindung

Erfindungsgemäß werden ein Verfahren zur Kommunikation zwischen Softwarekomponenten in einem Kraftfahrzeug sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die Softwarekomponenten sind insbesondere als Softwarekomponenten eines eingebetteten Systems des Kraftfahrzeugs ausgebildet, beispielsweise eines Steuergeräts des Kraftfahrzeugs. Die Softwarekomponenten kommunizieren insbesondere im Zuge des Betriebs des Kraftfahrzeugs miteinander und tauschen insbesondere Daten zum Betrieb des Kraftfahrzeugs aus.

Die Softwarekomponenten bzw. das entsprechende eingebettete System können in unterschiedlichen Betriebsmodi betrieben werden. In den unterschiedlichen Betriebsmodi kommunizieren jeweils Softwarekomponenten auf unterschiedliche Weisen miteinander. Insbesondere kommunizieren in einigen der Betriebsmodi Softwarekomponenten miteinander, welche in anderen Betriebsmodi nicht miteinander kommunizieren.

Zu einem ersten Zeitpunkt wird bestimmt, welche Softwarekomponenten in den unterschiedlichen Betriebsmodi jeweils auf welche Weise miteinander kommunizieren. Basierend darauf wird für jeden der unterschiedlichen Betriebsmodi jeweils ein Kommunikationsprofil bestimmt. In den Kommunikationsprofilen werden somit jeweils die Kommunikationsbeziehungen der einzelnen Softwarekomponenten des entsprechenden Betriebsmodus hinterlegt.

Insbesondere werden Kommunikationsmatrizen als Kommunikationsprofile bestimmt. In einer Kommunikationsmatrix werden alle Kommunikationsbeziehungen in einem Netzwerk als Sender-Empfänger-Beziehung insbesondere tabellarisch zusammengefasst.

Zu einem zweiten Zeitpunkt werden die Softwarekomponenten in den unterschiedlichen Betriebsmodi betrieben und die die Softwarekomponenten ausführenden Recheneinheit(en) werden gemäß dem entsprechenden Kommunikationsprofil des jeweiligen aktuellen Betriebsmodus konfiguriert. Der erste Zeitpunkt liegt vor dem zweiten Zeitpunkt.

Der zweite Zeitpunkt beschreibt insbesondere die Laufzeit bzw. den regulären Betrieb der Softwarekomponenten bzw. des eingebetteten Systems. Die Kommunikationsprofile werden zu dem ersten Zeitpunkt vor diesem regulären Betrieb der Softwarekomponenten bestimmt. Insbesondere können die Kommunikationsprofile zu Beginn jedes regulären Betriebs des eingebetteten Systems erneut bestimmt werden. Die Kommunikationsprofile können auch nur einmalig bestimmt werden, beispielsweise während eines Herstellungsprozesses des Kraftfahrzeugs, beispielsweise an einem Bandende.

### Vorteile der Erfindung

Durch das Verfahren wird es ermöglicht, die Kommunikation der Softwarekomponenten durch Bestimmen der Kommunikationsprofile zu dem ersten Zeitpunkt statisch vorzukonfigurieren. Während der Laufzeit der Softwarekomponenten kann dynamisch und flexibel zwischen diesen a priori statisch vorkonfigurierten Kommunikationsprofilen gewechselt werden.

In herkömmlichen eingebetteten Systemen in Kraftfahrzeugen ist es zumeist nicht möglich, den Ressourcenbedarf der Softwarekomponenten während der Laufzeit zu verändern. Herkömmlicherweise wird die Kommunikationsstruktur, d.h. insbesondere die Anzahl der Kommunikationskanäle innerhalb einer Recheneinheit und/oder zwischen Recheneinheiten, der Softwarekomponenten für sämtliche Betriebsmodi als ganzes vorkonfiguriert, ohne dabei Unterschiede zwischen einzelnen Betriebsmodi zu berücksichtigen. Während der Laufzeit ist bzw. sind die Recheneinheit(en) starr an diese gemeinsame Vorkonfiguration gebunden.

Im Zuge des Verfahrens hingegen wird die Kommunikation der Softwarekomponenten für jeden einzelnen Betriebsmodus separat vorkonfiguriert. Die Konfiguration der Recheneinheit(en) erfolgt gemäß dem jeweiligen Kommunikationsprofil in jedem einzelnen Betriebsmodus individuell, auf den jeweiligen Betriebsmodus bestmöglich zugeschnitten. Unterschiede im Ressourcenbedarf der einzelnen Betriebsmodi werden somit berücksichtigt.

Bevorzugt wird zu dem zweiten Zeitpunkt bei einem Wechsel zwischen zwei der unterschiedlichen Betriebsmodi auch zwischen den entsprechenden Kommunikationsprofilen dieser zwei der unterschiedlichen Betriebsmodi gewechselt. Insbesondere wenn eine übergeordnete Steuersoftware (beispielsweise ein Laufzeitsystem, Betriebssystem) zwischen den Betriebsmodi wechselt, schaltet die Steuersoftware auch zwischen den jeweiligen Kommunikationsprofilen um. Während der Laufzeit kann somit dynamisch zwischen statisch vorkonfigurierten Kommunikationsprofilen gewechselt werden.

Vorteilhafterweise werden bei einem Wechsel zwischen zwei der unterschiedlichen Betriebsmodi zu dem zweiten Zeitpunkt Ressourcen neu verteilt. Unter Ressourcen seien in diesem Zusammenhang insbesondere Hardwareressourcen zu verstehen, welche für die Kommunikation von Softwarekomponenten verwendet werden. Vorzugsweise sind unter Ressourcen Kommunikationsverbindungen bzw. Kommunikationskanäle und/oder Speichereinheiten, insbesondere Pufferspeicher zu verstehen. Ressourcen sind in eingebetteten Systemen zumeist begrenzt, doch können durch das Verfahren auch diese während der Laufzeit des eingebetteten Systems dynamisch neu verteilt werden.

In herkömmlichen eingebetteten Systemen werden Ressourcen a priori vor dessen Laufzeit statisch den einzelnen Softwarekomponenten zugewiesen. Diese Zuweisung erfolgt gemeinsam für sämtliche Betriebsmodi als ganzes.

Ressourcen werden dabei statisch für die Kommunikation spezieller Softwarekomponenten miteinander reserviert und können während der Laufzeit zumeist ausschließlich für die Kommunikation dieser speziellen Softwarekomponenten verwendet werden. Auch wenn diese speziellen Softwarekomponenten in machen Betriebsmodi nicht miteinander kommunizieren, bleiben die entsprechenden zugeteilten Ressourcen dennoch für diese speziellen Softwarekomponenten reserviert und verbleiben in diesen Betriebsmodi ungenutzt.

Im Gegensatz dazu werden gemäß einer vorteilhaften Ausführung des erfindungsgemäßen Verfahrens bei einem Wechsel zwischen zwei der unterschiedlichen Betriebsmodi Ressourcen, die in dem einen dieser zwei Betriebsmodi für die Kommunikation einer ersten Anzahl von Softwarekomponenten miteinander verwendet werden, in dem anderen dieser zwei Betriebsmodi für eine Kommunikation einer zweiten Anzahl von Softwarekomponenten miteinander verwendet. Die Verwendung der Ressourcen erfolgt jeweils in Abhängigkeit von dem entsprechenden Kommunikationsprofil des jeweiligen Betriebsmodus. Ressourcen werden somit in Abhängigkeit von den Kommunikationsprofilen während der Laufzeit flexibel unterschiedlichen Softwarekomponenten neu zugeteilt. Die Ressourcen sind nicht während der Laufzeit ausschließlich für spezielle Softwarekomponenten reserviert.

Bevorzugt kommuniziert die erste Anzahl von Softwarekomponenten in dem einen dieser zwei Betriebsmodi miteinander und in dem anderen der zwei Betriebsmodi nicht. Die zweite Anzahl von Softwarekomponenten kommuniziert weiter bevorzugt in dem einen dieser zwei Betriebsmodi nicht miteinander, dafür aber in dem anderen der zwei Betriebsmodi. Bei herkömmlichen eingebetteten Systemen würden die Ressourcen, die der ersten Anzahl von Softwarekomponenten zugeiteilt sind, nur in dem einen Betriebsmodus genutzt werden und in dem anderen ungenutzt bleiben. Analog würden die Ressourcen, die der zweiten Anzahl von Softwarekomponenten zugeiteilt sind, in dem einen Betriebsmodus ungenutzt bleiben. Im Gegensatz dazu können diese Ressourcen gemäß dieser bevorzugten Ausführungsform des erfindungsgemäßen Verfahrens neu zugeteilt werden. Bei einem Wechsel zwischen diesen jeweiligen Betriebsmodi können sich diese erste Anzahl und diese zweite Anzahl von Softwarekomponenten Ressourcen teilen.

Die erste und die zweite Anzahl von Softwarekomponenten können jeweils verschiedene Softwarekomponenten sein. Beispielsweise kann in dem ersten Betriebsmodus eine erste Softwarekomponente mit einer zweiten Softwarekomponente als erste Anzahl miteinander kommunizieren und in dem zweiten Betriebsmodus eine dritte Softwarekomponente mit einer vierten Softwarekomponente als zweite Anzahl. Die erste und die zweite Anzahl von Softwarekomponenten können andererseits auch zumindest teilweise identisch sein, d.h. wenigstens eine Komponente ist Bestandteil sowohl der ersten als auch der zweiten Anzahl von Softwarekomponenten. Beispielsweise kann in dem ersten Betriebsmodus eine erste Softwarekomponente mit einer zweiten Softwarekomponente als erste Anzahl miteinander kommunizieren und in dem zweiten Betriebsmodus die erste Softwarekomponente mit einer dritten Softwarekomponente als zweite Anzahl.

Vorzugsweise werden zu dem ersten Zeitpunkt sämtliche möglichen Wechsel zwischen zwei der unterschiedlichen Betriebsmodi untersucht. Bevorzugt wird für jeden möglichen Wechsel jeweils bestimmt, welche der Softwarekomponenten in dem einen der zwei Betriebsmodi, aber nicht in dem anderen der zwei Betriebsmodi miteinander kommunizieren. Diese Informationen werden vorzugsweise in den entsprechenden Kommunikationsprofilen der jeweiligen Betriebsmodi hinterlegt. Insbesondere werden somit für jeden möglichen Wechsel die jeweiligen erste Anzahl von Softwarekomponenten und die jeweilige zweite Anzahl von Softwarekomponenten erkannt. Insbesondere wird in dem Kommunikationsprofil eines jeweiligen Betriebsmodus hinterlegt, ob bei einem Wechsel von diesem Betriebsmodus in einen speziellen anderen Betriebsmodus Ressourcen, die in diesem Betriebsmodus für eine spezielle Softwarekomponente reserviert sind, in dem anderen Betriebsmodus für eine anderen Softwarekomponente verwendet werden kann.

Bevorzugt werden als Softwarekomponenten Prozesse bzw. Rechenoperationen wie etwa Steuerungsprogramme verwendet. Diese Softwarekomponenten werden insbesondere zum Betrieb des Kraftfahrzeugs aufgeführt, beispielsweise eine Software in einer Motorsteuerung.

Als die Softwarekomponenten ausführende Recheneinheiten werden bevorzugt Sensoren, Aktoren, Steuergeräte, Mikrokontroller, integrierte Schaltkreise (IC), System-on-a-Chip (Ein-Chip-System, SoC) verwendet. Vorzugsweise werden die Softwarekomponenten von einem Network-on-a-chip-System (NoC) ausgeführt. Ein Network-on-a-chip-System kann beispielsweise für die Kommunikation in einem integrierten Schaltkreise (IC) verwendet werden, beispielsweise für die Kommunikation zwischen IP-Kernen (intellectual property cores, IP-cores) in einem System-on-a-Chip.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Die Erfindung entfaltet besondere Vorteile bei der Implementierung in AUTOSAR- oder MSR-Systemen.

Wesentlich für AUTOSAR ist die logische Aufteilung in die steuergerätespezifische Basis-Software (Basic Software, BSW) und die steuergeräteunabhängige Anwendungs-Software (ASW). Dazwischen liegt ein virtuelles Funktionsbussystem (Virtual Functional Bus, VFB). Dieser virtuelle Funktionsbus verbindet alle Softwarekomponenten, auch die, die in unterschiedlichen Steuergeräten implementiert sind. Die funktionalen Softwarekomponenten (Software Component, SWC) sind strikt voneinander und von der Basis-Software getrennt. Sie kommunizieren über die AUTOSAR-Schnittstelle mit den anderen Funktionen und den Steuergeräteschnittstellen. Die Basis-Software (Basic Software, BSW) enthält die steuergerätespezifischen Programmteile, wie die Kommunikationsschnittstellen, die Diagnose und das Speichermanagement. Kernstück des Architekturkonzepts ist die AUTOSAR-Laufzeitumgebung (Run-Time Environment, RTE), eine Kommunikationsschicht, die nach dem Prinzip des Virtual Functional Bus (VFB) im Sinne einer Middleware von der realen Steuergeräte-Topologie und den daraus resultierenden Kommunikationsbeziehungen abstrahiert. Zwei Funktionen können demnach ohne Kenntnis des Signalpfades Informationen miteinander austauschen, indem sie sog. Kommunikationsports der Laufzeitumgebung verwenden. Dieser Mechanismus macht sich dadurch vorteilhaft bemerkbar, dass Funktionen unabhängig von der später im Fahrzeug existierenden Topologie entwickelt werden können. Die tatsächlichen Signalpfade können nun gemäß einer Ausführungsform der Erfindung dynamisch festgelegt werden.

Ähnliches gilt für Manufacturer Supplier Relationship (MSR Systeme).

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen
- Figur 1: zeigt schematisch ein Kraftfahrzeug mit einem Steuergerät, das dazu eingerichtet ist, eine bevorzugte Ausführungsform eines erfindungsgemäßen Verfahrens durchzuführen.
- Figur 2: zeigt schematisch das Steuergerät in zwei unterschiedlichen Betriebsmodi.
- Figur 3: zeigt schelmisch eine bevorzugte Ausführungsform des erfindungsgemäßen Verfahrens als Blockdiagramm.

### Ausführungsform(en) der Erfindung

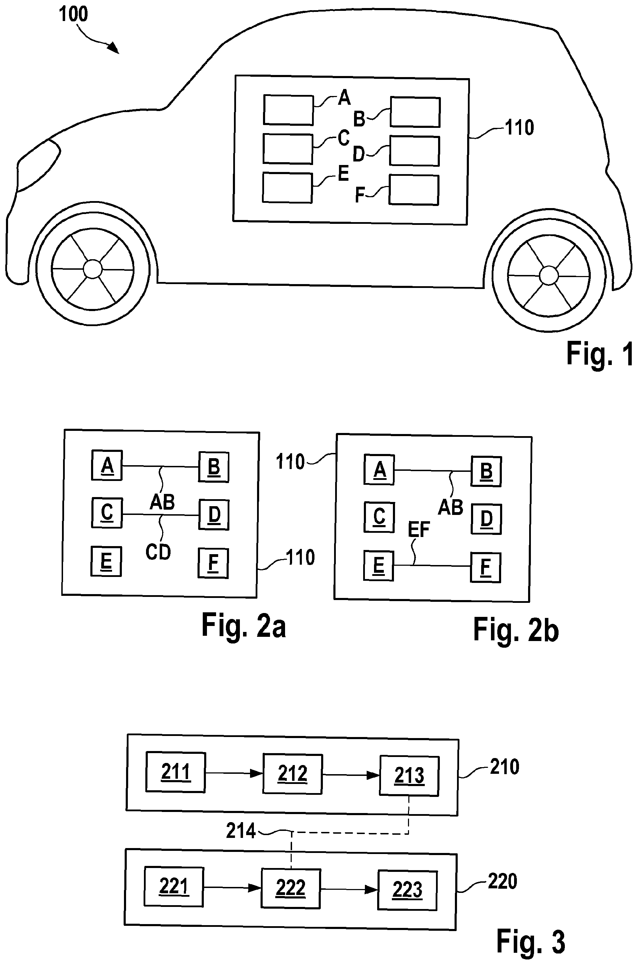

In Figur 1 ist ein Kraftfahrzeug schematisch dargestellt und mit 100 bezeichnet. Das Kraftfahrzeug weist ein Steuergerät 110 auf, beispielsweise ein Motorsteuergerät. Das Steuergerät 110 stellt insbesondere ein eingebettetes System des Kraftfahrzeugs 100 dar.

Im Zuge des Betriebs des Kraftfahrzeugs 100 werden in dem Steuergerät 110 verschiedene Softwarekomponenten A bis F in Form von verschiedenen Steuerungsprogrammen bzw. Programmteilen ausgeführt.

Das Steuergerät 110 kann in unterschiedlichen Betriebsmodi betrieben werden. Beispielsweise wird das Steuergerät 110 während eines Startprozesses des Motors in einem ersten Betriebsmodus betrieben und nachdem der Motor gestartet wurde in einem zweiten Betriebsmodus.

In Figur 2a ist das Steuergerät 110 schematisch in dem ersten Betriebsmodus dargestellt, in Figur 2b in dem zweiten Betriebsmodus.

In den beiden Betriebsmodi werden in dem Steuergerät Softwarekomponenten A bis D ausgeführt. In beiden Betriebsmodi kommunizieren die Softwarekomponenten A und B miteinander und tauschen Daten aus, angedeutet durch Bezugszeichen AB. Die Softwarekomponenten C und D kommunizieren nur in dem ersten Betriebsmodus miteinander, angedeutet durch Bezugszeichen CD, nicht aber in dem zweiten Betriebsmodus. Die Softwarekomponenten E und F kommunizieren nur in dem zweiten Betriebsmodus miteinander, angedeutet durch Bezugszeichen EF, nicht aber in dem ersten Betriebsmodus.

Um die Kommunikation zwischen den Softwarekomponenten A bis F in den beiden Betriebsmodi durchzuführen, ist das Steuergerät 110, insbesondere programmtechnisch, dazu eingerichtet, eine bevorzugte Ausführungsform eines erfindungsgemäßen Verfahrens durchzuführen, welche in Figur 3 schematisch als ein Blockdiagramm dargestellt ist.

Zur Kommunikation der Softwarekomponenten miteinander benötigen die jeweiligen Softwarekomponenten Ressourcen des Steuergeräts, insbesondere einen Kommunikationskanal und einen Pufferspeicher. Durch das Verfahren können die Softwarekomponenten in den beiden Betriebsmodi ressourcenschonend kommunizieren.

Die Schritte 211 bis 213 werden zu einem ersten Zeitpunkt 210 durchgeführt, beispielsweise im Zuge einer Programmierung des Steuergeräts 110 an einem Bandende.

In einem ersten Schritt 211 wird bestimmt, in welchen Betriebsmodi welche Softwarekomponenten miteinander kommunizieren. Wie in Bezug auf Figur 2a erläutert, wird dabei bestimmt, dass in dem ersten Betriebsmodus die Softwarekomponenten A und B miteinander kommunizieren sowie die Softwarekomponenten C und D. Weiterhin wird bestimmt, dass in dem zweiten Betriebsmodus die Softwarekomponenten A und B sowie die Softwarekomponenten E und F miteinander kommunizieren.

In Schritt 212 wird für jeden der zwei Betriebsmodi jeweils ein Kommunikationsprofil in Form einer Kommunikationsmatrix erstellt, in der jeweils die in Schritt 211 bestimmten Kommunikationsbeziehungen der Softwarekomponenten A bis F hinterlegt werden.

In Schritt 213 werden sämtliche mögliche Wechsel der Betriebsmodi untersucht. In diesem Beispiel werden die Wechsel von dem ersten in den zweiten und von dem zweiten in den ersten Betriebsmodus untersucht. Dabei wird bestimmt, welche Softwarekomponenten in dem ersten Betriebsmodus miteinander kommunizieren, aber nicht in dem zweiten Betriebsmodus und umgekehrt.

Die Softwarekomponenten C und D werden als eine erste Anzahl von Softwarekomponenten bestimmt, die in dem ersten Betriebsmodus miteinander kommuniziert und nicht in dem zweiten Betriebsmodus. Die Softwarekomponenten E und F werden als eine zweite Anzahl von Softwarekomponenten bestimmt, die in dem zweiten Betriebsmodus miteinander kommuniziert und nicht in dem ersten Betriebsmodus. Diese Informationen werden in den Kommunikationsprofilen des ersten und des zweiten Betriebsmodus hinterlegt.

Die Schritte 221 bis 223 werden zu einem zweiten Zeitpunkt 220 durchgeführt, der nach dem ersten Zeitpunkt liegt, insbesondere während des regulären Betriebs des Steuergeräts 110 während einer Fahrt des Kraftfahrzeugs.

In Schritt 221 wird das Steuergerät 110 in dem ersten Betriebsmodus betrieben, um den Motor zu starten. Die Konfiguration des Steuergeräts 110 erfolgt dabei gemäß dem ersten Kommunikationsprofil. Dabei wird ein erster Kommunikationskanal und ein erster Pufferspeicher für die Kommunikation der Softwarekomponenten A und B bereitgestellt und ein zweiter Kommunikationskanal und ein zweiter Pufferspeicher für die Kommunikation der Softwarekomponenten C und D.

Nachdem der Motor gestartet wurde, wird in Schritt 222 zwischen dem ersten und dem zweiten Betriebsmodus gewechselt. Gleichermaßen wird zwischen dem ersten und dem zweiten Kommunikationsprofil gewechselt. Wie in Schritt 213 untersucht wurde und wie in den Kommunikationsprofil hinterlegt wurde, kommunizieren die Softwarekomponenten C und D in dem zweiten Betriebsmodus nicht mehr miteinander, dafür aber die Softwarekomponenten E und F. Bei dem Wechsel zwischen dem ersten und dem zweiten Betriebsmodus werden in Schritt 222 Ressourcen in Abhängigkeit von den Kommunikationsprofilen neu verteilt, angedeutet durch Bezugszeichen 214.

Der zweite Kommunikationskanal und der zweite Pufferspeicher, die in dem ersten Betriebsmodus für die Kommunikation der Softwarekomponenten C und D verwendet wurden, werden nun den Softwarekomponenten E und F zugeteilt.

In Schritt 223 wird das Steuergerät 110 in dem zweiten Betriebsmodus betrieben. Die Kommunikation der Softwarekomponenten A bis F erfolgt dabei gemäß dem zweiten Kommunikationsprofil. Für die Kommunikation der Softwarekomponenten A und B wird der erste Kommunikationskanal und der erste Pufferspeicher verwendet, für die Kommunikation der Softwarekomponenten E und F wird der zweite Kommunikationskanal und der zweite Pufferspeicher verwendet.

Auf analoge Weise ist es auch denkbar, dass die erste und die zweite Anzahl von Softwarekomponenten zumindest teilweise identische Softwarekomponenten sind. Beispielsweise können die Softwarekomponenten C und D als erste Anzahl in dem ersten Betriebsmodus miteinander kommunizieren und beispielsweise die Softwarekomponenten C und F als zweite Anzahl in dem zweiten Betriebsmodus. Analog zu obiger Beschreibung werden auch in diesem Fall Ressourcen, die in dem ersten Betriebsmodus für die Kommunikation zwischen den Softwarekomponenten C und D verwendet werden, in dem zweiten Betriebsmodus für die Kommunikation zwischen den Softwarekomponenten C und F verwendet.

## Patentansprüche

1. Verfahren zur Kommunikation zwischen Softwarekomponenten (A, B, C, D, E, F) in einem Kraftfahrzeug (100),
- wobei die Softwarekomponenten (A, B, C, D, E, F) in unterschiedlichen Betriebsmodi betrieben werden können, wobei in den unterschiedlichen Betriebsmodi die Softwarekomponenten (A, B, C, D, E, F) unterschiedlich miteinander kommunizieren,
- wobei zu einem ersten Zeitpunkt (210) bestimmt wird, welche Softwarekomponenten (A, B, C, D, E, F) in den unterschiedlichen Betriebsmodi jeweils auf welche Weise miteinander kommunizieren (211), und basierend darauf für jeden der unterschiedlichen Betriebsmodi jeweils ein Kommunikationsprofil bestimmt wird (212),
- wobei die Softwarekomponenten (A, B, C, D, E, F) zu einem zweiten Zeitpunkt (220) in den unterschiedlichen Betriebsmodi betrieben werden und eine oder mehrere die Softwarekomponenten (A, B, C, D, E, F) ausführende Recheneinheit(en) (110) gemäß einem entsprechenden Kommunikationsprofil des jeweiligen Betriebsmodus konfiguriert wird bzw. werden (221, 223).

2. Verfahren nach Anspruch 1, wobei zu dem zweiten Zeitpunkt (220) bei einem Wechsel zwischen zwei der unterschiedlichen Betriebsmodi zwischen den entsprechenden Kommunikationsprofilen dieser zwei der unterschiedlichen Betriebsmodi gewechselt wird (222).

3. Verfahren nach Anspruch 2, wobei zu dem zweiten Zeitpunkt (220) bei einem Wechsel zwischen zwei der unterschiedlichen Betriebsmodi in Abhängigkeit von den entsprechenden Kommunikationsprofilen dieser zwei der unterschiedlichen Betriebsmodi Ressourcen neu verteilt werden (222).

4. Verfahren nach Anspruch 3, wobei zu dem zweiten Zeitpunkt (220) bei dem Wechsel zwischen den zwei der unterschiedlichen Betriebsmodi in Abhängigkeit von den entsprechenden Kommunikationsprofilen dieser zwei der unterschiedlichen Betriebsmodi Ressourcen, die in dem einen dieser zwei Betriebsmodi für die Kommunikation einer ersten Anzahl von Softwarekomponenten (C, D) verwendet werden, in dem anderen dieser zwei Betriebsmodi für eine Kommunikation einer zweiten Anzahl von Softwarekomponenten (E, F) verwendet werden (222).

5. Verfahren nach Anspruch 4,
- wobei die erste Anzahl von Softwarekomponenten (C, D) in dem einen dieser zwei Betriebsmodi miteinander kommuniziert und in dem anderen der zwei Betriebsmodi nicht miteinander kommuniziert und
- wobei die zweite Anzahl von Softwarekomponenten (E, F) in dem einen dieser zwei Betriebsmodi nicht miteinander kommuniziert und in dem anderen der zwei Betriebsmodi miteinander kommuniziert.

6. Verfahren nach Anspruch 4 oder 5, wobei wenigstens eine Komponente Bestandteil sowohl der ersten Anzahl von Softwarekomponenten (C, D) als auch der zweiten Anzahl von Softwarekomponenten (E, F) ist.

7. Verfahren nach einem der vorstehenden Ansprüche, wobei zu dem ersten Zeitpunkt (210) für jeden möglichen Wechsel zwischen zwei der unterschiedlichen Betriebsmodi jeweils bestimmt wird, welche der Softwarekomponenten (A, B, C, D, E, F) in dem einen, aber nicht in dem anderen der zwei Betriebsmodi miteinander kommunizieren, und wobei diese Informationen in den entsprechenden Kommunikationsprofilen der jeweiligen Betriebsmodi hinterlegt werden (213).

8. Verfahren nach einem der vorstehenden Ansprüche, wobei AUTOSAR- oder MSR-Softwarekomponenten als die Softwarekomponenten (A, B, C, D, E, F) verwendet werden.

9. Recheneinheit (110) oder Verbund von Recheneinheiten, die bzw. der dazu eingerichtet ist, ein Verfahren nach einem der vorstehenden Ansprüche durchzuführen.

10. Computerprogramm, das eine Recheneinheit (110) oder einen Verbund von Recheneinheiten dazu veranlasst, ein Verfahren nach einem der Ansprüche 1 bis 8 durchzuführen, wenn es auf der Recheneinheit (110) bzw. dem Verbund von Recheneinheiten ausgeführt wird.

11. Maschinenlesbares Speichermedium mit einem darauf gespeicherten Computerprogramm nach Anspruch 10.

## Claims

1. Method for the communication between software components (A, B, C, D, E, F) in a motor vehicle (100),
- wherein the software components (A, B, C, D, E, F) can be operated in different operating modes, wherein the software components (A, B, C, D, E, F) communicate differently with one another in the different operating modes,
- wherein, at a first time (210), it is determined which software components (A, B, C, D, E, F) communicate (211) with one another in the different operating modes in which way in each case and, on that basis, a communication profile is respectively determined (212) for each of the different operating modes,
- wherein the software components (A, B, C, D, E, F) are operated in the different operating modes at a second time (220), and one or more computing unit(s) (110) executing the software components (A, B, C, D, E, F) is or are configured (221, 223) in accordance with an corresponding communication profile of the respective operating mode.

2. Method according to Claim 1, wherein, at the second time (220), at a change between two of the different operating modes, a change is made (222) between the corresponding communication profiles of these two of the different operating modes.

3. Method according to Claim 2, wherein, at the second time (220), at a change between two of the different operating modes, resources are redistributed depending on the corresponding communication profiles (222) of these two of the different operating modes.

4. Method according to Claim 3, wherein, at the second time (220), at the change between the two of the different operating modes, resources which are used in the one of these two operating modes for the communication of a first number of software components (C, D) are used (222) in the other of these two operating modes for communication of a second number of software components (E, F), depending on the corresponding communication profiles of these two of the different operating modes.

5. Method according to Claim 4,
- wherein the first number of software components (C, D) communicates with each other in the one of these two operating modes and does not communicate with each other in the other of the two operating modes, and
- wherein the second number of software components (E, F) does not communicate with each other in the one of these two operating modes and communicates with each other in the other of the two operating modes.

6. Method according to Claim 4 or 5, wherein at least one component is a constituent part both of the first number of software components (C, D) and of the second number of software components (E, F).

7. Method according to one of the preceding claims, wherein, at the first time (210), for each possible change between two of the different operating modes, it is respectively determined which of the software components (A, B, C, D, E, F) communicate with one another in the one but not in the other of the two operating modes, and wherein this information is stored (213) in the corresponding communication profiles of the respective operating modes.

8. Method according to one of the preceding claims, wherein AUTOSAR software components or MSR software components are used as the software components (A, B, C, D, E, F).

9. Computing unit (110) or network of computing units which is or are configured to carry out a method according to one of the preceding claims.

10. Computer program which causes a computing unit (110) or a network of computer units to carry out a method according to one of Claims 1 to 8 when it is executed on the computing unit (110) or the network of computing units.

11. Machine-readable storage medium with a computer program according to Claim 10 stored thereon.

## Revendications

1. Procédé de communication entre des composants logiciels (A, B, C, D, E, F) dans un véhicule automobile (100),
- les composants logiciels (A, B, C, D, E, F) pouvant fonctionner dans différents modes de fonctionnement, les composants logiciels (A, B, C, D, E, F) communiquant différemment entre eux dans les différents modes de fonctionnement,
- une détermination étant effectuée à un premier instant (210) permettant de définir quels composants logiciels (A, B, C, D, E, F) dans les différents modes de fonctionnement communiquent entre eux et respectivement de quelle manière (211) et, en se basant sur cette détermination, un profil de communication est respectivement déterminé (212) pour chacun des différents modes de fonctionnement,
- les composants logiciels (A, B, C, D, E, F), à un deuxième instant (220), étant mis en fonctionnement dans les différents modes de fonctionnement et une ou plusieurs unités de calcul (110) qui exécutent les composants logiciels (A, B, C, D, E, F) étant configurée(s) (221, 223) conformément à un profil de communication correspondant du mode de fonctionnement respectif.

2. Procédé selon la revendication 1, selon lequel, au deuxième instant (220), lors d'un changement entre deux des différents modes de fonctionnement, un changement est effectué (222) entre les profils de communication correspondants de ces deux parmi les différents modes de fonctionnement.

3. Procédé selon la revendication 2, selon lequel, au deuxième instant (220), lors d'un changement entre deux des différents modes de fonctionnement, les ressources sont redistribuées (222) en fonction des profils de communication correspondants de ces deux parmi les différents modes de fonctionnement.

4. Procédé selon la revendication 3, selon lequel, au deuxième instant (220), lors du changement entre les deux des différents modes de fonctionnement, les ressources qui, dans l'un de ces deux modes de fonctionnement, sont utilisées pour la communication d'un premier nombre de composants logiciels (C, D) sont utilisées dans l'autre de ces deux modes de fonctionnement pour une communication d'un deuxième nombre de composants logiciels (E, F) (222) en fonction des profils de communication correspondants de ces deux parmi les différents modes de fonctionnement.

5. Procédé selon la revendication 4,
- selon lequel le premier nombre de composants logiciels (C, D) communiquent entre eux dans l'un de ces deux modes de fonctionnement et ne communiquent pas entre eux dans l'autre des deux modes de fonctionnement et
- selon lequel le deuxième nombre de composants logiciels (E, F) ne communiquent pas entre eux dans l'un de ces deux modes de fonctionnement et communiquent entre eux dans l'autre des deux modes de fonctionnement.

6. Procédé selon la revendication 4 ou 5, au moins un composant faisant partie à la fois du premier nombre de composants logiciels (C, D) et du deuxième nombre de composants logiciels (E, F).

7. Procédé selon l'une des revendications précédentes, selon lequel, au premier instant (210) de chaque changement possible entre deux des différents modes de fonctionnement, une détermination est respectivement effectuée permettant de définir quels composants logiciels (A, B, C, D, E, F) communiquent entre eux dans l'un, mais pas dans l'autre des deux modes de fonctionnement, et ces informations étant stockées (213) dans les profils de communication correspondants des modes de fonctionnement respectifs.

8. Procédé selon l'une des revendications précédentes, des composants logiciels AUTOSTAR ou MSR étant utilisés en tant que composants logiciels (A, B, C, D, E, F).

9. Unité de calcul (110) ou groupement d'unités de calcul qui est conçu(e) pour mettre en oeuvre un procédé selon l'une des revendications précédentes.

10. Programme informatique qui amène une unité de calcul (110) ou un groupement d'unités de calcul à mettre en oeuvre un procédé selon l'une des revendications 1 à 8 lorsqu'il est exécuté sur l'unité de calcul (110) ou le groupement d'unités de calcul.

11. Support d'enregistrement lisible par machine sur lequel est enregistré un programme informatique selon la revendication 10.
